# EUROPÄISCHE PATENTSCHRIFT

(11) **EP 1 533 181 B1**
(45) Veröffentlichungstag und Bekanntmachung des Hinweises auf die Patenterteilung: **12.09.2007**
(21) Anmeldenummer: 04104697.0
(22) Anmeldetag: 27.09.2004
(51) Int. Cl.: B60Q 1/48

(54) **Vorrichtung zur semiautonomen Unterstützung des Einparkvorgangs bei Fahrzeugen**
Device for the semiautomatique support for parking a vehicle
Dispositif pour le support semi-automatique pour garer un véhicule

(30) Priorität: 22.11.2003 DE 10354661
(43) Veröffentlichungstag der Anmeldung: 25.05.2005
(73) Patentinhaber: ROBERT BOSCH GMBH, 70442 Stuttgart (DE)
(72) Erfinder: Lee, Wei-Chia, 71229 Leonberg (DE)

(56) Entgegenhaltungen:
- EP-A- 1 170 171
- EP-A- 1 327 559

## Beschreibung

Die Erfindung betrifft eine Vorrichtung zur semiautonomen Unterstützung des Einparkvorgangs bei Fahrzeugen nach dem Oberbegriff des Anspruchs 1.

### Stand der Technik:

Aufgrund der zunehmenden Verkehrsdichte und verstärkten Bebauung freier Flächen wird der Verkehrsraum, insbesondere in Ballungszentren kontinuierlich eingeengt. Dadurch wird auch der zur Verfügung stehende Parkraum beschränkt und die Suche nach einer geeigneten Parklücke belastet den Fahrer zusätzlich zum immer dichter werdenden Verkehr. Hier kann zunächst die Funktion einer Parklückenvermessung dem Fahrer bei der Suche nach einer ausreichend großen Parklücke helfen. Anschließend kann ein semiautonomer Einparkassistent das zügige Einfahren in eine Parklücke unterstützen. Somit werden lange und/oder erfolglose Parkvorgänge vermeidbar.

Ein solches System ist aus der EP 1 327 559 bekannt.

Ein semiautonomes Einparksystem berechnet, nachdem eine passende Parklücke gefunden wurde, in Abhängigkeit von der Länge der Parklücke eine geeignete, gegebenenfalls bestmögliche Einfahrbahn, im Folgenden auch mit Einfahr- oder Solltrajektorie bzw. Einpark- bzw. Einfahrbahn bezeichnet. Mittels eines geeigneten Kommunikationssystems, einem sogenannten HMI (Human Machine Interface), kann dem Fahrer die Information z.B. optisch, akustisch oder haptisch übermittelt werden, wie er zu lenken und Gas zu geben bzw. zu bremsen hat, um entsprechend der geeigneten Einfahrbahn in die Parklücke hinein zu fahren.

Die Abweichungen zur Solltrajektorie werden vom Fahrer selbst oder vom System automatisch ausgeglichen. Die Längsbewegung wird normalerweise vom Fahrer bestimmt. Das Lenken kann auch automatisch durchgeführt werden, und der Fahrer übernimmt nur noch das Gas geben bzw. Bremsen. Beim automatischen Einparken wird auch das Gas geben und Bremsen vom System übernommen.

Bei der Parklückenvermessung können die Positionen der Begrenzungen nur bedingt mit ausreichender Sicherheit lokalisiert werden. Daher ist es notwendig, die Unsicherheit mit einem Toleranz-Versatz zu kompensieren, damit die nachfolgende Bahnplanung eine 100%ig kollisionsfreie Einpark-Trajektorie berechnen kann. Berechnet z.B. die Parklückenvermessung aus den Sensoren die Begrenzung mit einer Genauigkeit von +/- 30 cm, dann ist es notwendig, ein Toleranzband von + 30 cm zu der berechneten Begrenzung zu addieren.

Außerdem ist aus Sicherheitsgründen ein Abstand vorne und hinten zu den begrenzenden Fahrzeugen einzuhalten, beispielsweise 25 cm vorne und 25 cm hinten. Durch diese erforderlichen Sicherheitspuffer kann es vorkommen, dass Parklücken, die eigentlich groß genug zum Einparken wären, vom System verworfen werden, weil mit den erforderlichen Sicherheitsabständen keine noch realistisch vorausrechenbare Einpark-Trajektorie selbst bei Zulassen eines Richtungswechsels beim Einparkvorgang gefunden werden kann.

### Aufgabe und Vorteile der Erfindung:

Der Erfindung liegt die Aufgabe zugrunde, eine Vorrichtung der einleitend bezeichneten Art bereitzustellen, mit welcher ein Einparkvorgang bei insbesondere kleinen Parklücken vom System vergleichsweise besser bewältigt werden kann.

Diese Aufgabe wird durch die Merkmale des Anspruchs 1 gelöst.

In den Unteransprüchen sind vorteilhafte und zweckmäßige Weiterbildungen der Erfindung angegeben.

Die Erfindung geht von einer Vorrichtung zur semiautonomen Unterstützung des Einparkvorgangs bei Fahrzeugen aus, die eine Einrichtung zur Ermittlung der Größe einer Parklücke, eine Rechnereinheit und Mittel zur Erfassung der aktuellen Position des Fahrzeugs sowie einer Kommunikationseinrichtung umfasst, mit welcher einem Fahrzeuglenker Informationen und/oder Anweisungen über einen Einparkvorgang vermittelbar sind, wobei die Rechnereinheit anhand der ermittelten Größe der Parklücke eine Einparkbahn vorgibt. Der Kern der Erfindung liegt nun darin, dass die Rechnereinheit dazu ausgelegt ist, über die Positionserfassungsmittel, die vorzugsweise Umfeldsensoren umfassen, wie z.B. Ultraschallsensoren, nach dem Einfahren des Fahrzeugs auf der Grundlage der vorgegebenen Einparkbahn in die Parklücke die Ausrichtung des Fahrzeugs in Bezug auf die Parklücke und den Rangierplatz vor und hinter dem Fahrzeug erneut zu bestimmen und anhand dieser Daten wenigstens eine weitere Einparkbahn zu berechnen. Dieser Vorgehensweise liegt die folgende Erkenntnis zugrunde:

Derzeit wird die Bahnplanung im Allgemeinen mit nur einem Lenkwechsel realisiert, z.B. geradeaus zurückfahren, in eine Richtung voll Einschlagen und später in die andere Richtung einschlagen, so dass das Fahrzeug am Ende parallel zum Bordstein steht. Ist die Parklücke aber kleiner, ist zusätzlich ein Fahrtrichtungswechsel mit nochmaligem Einschlagen erforderlich. Denn nach dem Beendigen des Einfahrens z.B. rückwärts steht das Fahrzeug schief und man muss die Fahrt- und Lenkrichtung wechseln, um schließlich das Fahrzeug parallel ausrichten zu können. Bei noch kleineren

Parklücken schlägt dieser Ansatz der Bahnplanung jedoch fehl, da dieser immer von der Anfangs bestimmten Parklückengröße ausgeht und auf dieser Grundlage eine Einfahr-Trajektorie mit mehrfachem Rangieren mit einem zu großen Rechenaufwand verbunden ist, und zudem beim tatsächlichen Einfahren sich dann nicht unbedeutende Abweichungen von einer derartigen Einfahrbahn einstellen können.

Diese Nachteile werden von der erfindungsgemäßen Vorrichtung dadurch vermieden, dass der Einparkvorgang sozusagen in zwei Phasen eingeteilt wird. Zunächst läuft der Einparkvorgang wie bei einem bekannten System mit der Berechnung einer Einfahrbahn anhand der Größe der Parklücke. Hierbei wird jedoch auch eine Einparkbahn in Kauf genommen, bei welcher das Fahrzeug nach dem Einfahren in einer Richtung "schief" in der Parklücke steht und dieser Ausrichtungsfehler bei einem herkömmlichen System auch durch einen nochmaligen Zug in die andere Richtung mit vorgegebenem Lenkeinschlag nicht korrigiert werden kann. Wichtig ist nur, dass das Fahrzeug grundsätzlich zumindest, wenn auch schief, in die Parklücke passt.

An dieser Stelle läuft die zweite Phase des Einparkvorgangs ab, indem die Ausrichtung des Fahrzeugs in Bezug auf die Parklücke und den Rangierplatz vor und hinter dem Fahrzeug durch z.B. Ultraschallsensoren erneut bestimmt wird. Das hat nicht nur den Vorteil, dass dann ausgehend von dieser neu bestimmten Ausrichtung bzw. dem neu bestimmten Rangierplatz der weitere Einparkvorgang vorgenommen werden kann, sondern die Erfassung der Ausrichtung des Fahrzeugs in der Parklücke und des Rangierplatzes vor und hinter dem Fahrzeug sich mit einer größeren Genauigkeit ausführen lässt, verglichen mit der Parklückenvermessung beim Vorbeifahren an der Parklücke.

Damit können die notwendigen Sicherheits-Toleranzbänder für die weitere oder mehrere weitere Einparkbahnen verkleinert werden, wodurch das System einen vergleichsweise größeren Platz für den weiteren Einparkvorgang in der Parklücke nutzen kann. Z.B. besteht eine weitere Einparkbahn nur aus einem Zug in eine Fahrtrichtung, wonach gegebenenfalls eine oder mehrere zusätzliche Einparkbahnen folgen. Eine erneute Vermessung der Parklücke kann somit nach jeder Einparkbahn stattfinden.

Dadurch kann der semiautonome Einparkassistent auch bei vergleichsweise kleinen Parklücken zum Einsatz kommen und ist überaus fehlertolerant.

Darüber hinaus hat diese Vorgehensweise den Vorteil, dass Anforderungen an die Genauigkeit der ersten Parklückenvermessung vermindert sind. Denn Fehler können zu einem späteren Zeitpunkt, wenn das Fahrzeug in der Parklücke steht, korrigiert werden. Hierdurch können vergleichsweise preiswerte Umfeldsensoren zum Einsatz kommen. Außerdem kann ein komplizierter Bahnplanungsalgorithmus entfallen, der insbesondere bei kleinen Parklücken unumgänglich wäre.

In einer besonders bevorzugten Ausgestaltung der Erfindung wird mittels der Rechnereinheit dem Fahrer über die Kommunikationseinrichtung mitgeteilt, das Fahrzeug anzuhalten, wenn beim Einfahren des Fahrzeugs auf der Grundlage der vorgegebenen Bahn die zur Parklücke zeigende vordere Ecke des Fahrzeugs an der außen liegenden Ecke eines angrenzend parkenden Fahrzeugs oder eines angrenzenden Hindernisses sich vorbei bewegt hat. Dieses Positionskriterium kann herangezogen werden, um das Ende der ersten Phase des Einparkvorgangs auf der Grundlage einer Einfahrbahn festzulegen, die anhand der Größe der Einparklücke aus der Parklückenvermessung durch Vorbeifahren an der Parklücke sich ergeben hat.

In einer außerdem vorteilhaften Ausgestaltung der Erfindung kann das Anhalten des Fahrzeugs durch entsprechende Mittel der Vorrichtung selbst, ohne weiteres Zutun eines Fahrers automatisch vorgenommen werden.

Bei beiden Anhaltevorgängen kann der Abstand zum hinteren Fahrzeug oder Hindernis sowie zum Bordstein ebenfalls als Stoppkriterium alternativ oder zusätzlich herangezogen werden. Sowohl der Abstand zum hinteren Fahrzeug oder Hindernis als auch zum Bordstein wird vorzugsweise laufend überwacht.

In einer überdies bevorzugten Ausgestaltung der Erfindung ist die Rechnereinheit dazu ausgebildet, nach dem Einfahren des Fahrzeugs auf der Grundlage einer vorgegebenen Einparkbahn über die Kommunikationseinrichtung zur Fortsetzung des Einparkvorgangs den Fahrer aufzufordern, nach rechts oder links zu lenken sowie vor- oder rückwärts zu fahren, gegebenenfalls abwechselnd und gegebenenfalls mehrfach, sofern die Positionserfassungsmittel eine Ausrichtung des Fahrzeugs in der Parklücke bestimmen, die noch in vorgegebener Weise ausreichend ist, um damit den Parkvorgang abschließen zu können.

In diesem Zusammenhang ist es insbesondere vorteilhaft, wenn die Rechnereinheit den jeweiligen Stopppunkt bei der Fortsetzung des Einparkvorgangs dem Fahrer in Abhängigkeit des von dem Positionserfassungsmitteln ermittelten Abstands vor oder hinter dem Fahrzeug über die Kommunikationsmittel mitteilt. Durch diese Vorgehensweise wird ein Rangieren des Fahrzeugs mit Unterstützung des semiautonomen Einparkassistenten ermöglicht, ohne dass dafür ein großer Rechenaufwand notwendig wäre. Denn bei jedem Stopppunkt wird vorzugsweise die Ausrichtung des Fahrzeugs in der Parklücke sowie die Abstände nach vorne und hinten neu ermittelt, um auf dieser Grundlage dann den nächsten Zug, z.B. voll einschlagen und nach links rückwärts fahren, vorzunehmen. Auf diese Weise lässt sich somit eine Art "Krebsgang" des Fahrzeugs realisieren, der sich nach jedem Zug in eine Fahrtrichtung wieder neu "kalibriert".

Damit wird ein außerordentlich fehlertolerantes System geschaffen, das z.B. problemlos auf Lenkfehler des Fahrers reagieren kann. Damit lässt sich auch ein "Fahrfehler" leicht korrigieren, wenn der Fahrer der ersten Einfahrbahn der vom System vorgegebenen Trajektorie nicht im ausreichenden Maße folgt.

Das Stoppen des Fahrzeugs nach jedem Zug in eine Fahrtrichtung beim "Krebsgang" des Fahrzeugs kann in einer bevorzugten Ausgestaltung auch vollautomatisch über entsprechende Stoppmittel vom semiautonomen Einparkassistenten selbst übernommen werden. In diesem Fall muss der Fahrer nur lenken, was ein bestimmter Kreis von Fahrern als angenehm empfindt. Im Weiteren ist es bevorzugt, wenn die Positionserfassungsmittel zur Bestimmung der Ausrichtung des Fahrzeugs Abstandssensoren, z.B. Ultraschallsensoren, Radarsensoren oder dergleichen umfassen. Zur Bestimmung der Ausrichtung des Fahrzeugs werden vorteilhafterweise Sensoren eingesetzt, mit welchen sich der Gierwinkel des Fahrzeugs erfassen lässt z.B. ein LenkwinkelSensor oder Radsensoren.

In einer weiteren besonders bevorzugten Ausgestaltung der Erfindung sind die Kommunikationsmittel als besonderes Interface zur Mitteilung des Fahrers der aktuellen Ausrichtung des Fahrzeugs in Bezug auf die Umgebung, z.B. Hindernisse, ausgelegt. Z.B. können dem Fahrer Abstände vor und hinter dem Fahrzeug sowie gegebenenfalls die Position der Ecken z.B. optisch in Form einer entsprechenden Grafik mitgeteilt werden. Außerdem kann es vorteilhaft sein, wenn die Position und Schieflage des Fahrzeugs bezüglich der Parklücke, z.B. im Hinblick auf vor und hinter dem einparkenden Fahrzeug stehende Fahrzeuge, auf den Kommunikationsmitteln darstellbar ist, z.B. grafisch dargestellt wird. Damit kann ein gesamtes Bild der Parksituation einschließlich der Hindernisse einem Fahrzeuglenker besonders übersichtlich mitgeteilt werden. Dies erleichtert dem Fahrer selbstständig zu entscheiden, wann er keine Unterstützung mehr benötigt und der Einparkvorgang abgeschlossen ist.

### Zeichnungen:

Mehrere Ausführungsbeispiele der Erfindung sind anhand der Zeichnungen unter Angabe weiterer Vorteile und Einzelheiten im Folgenden näher erläutert. Es zeigen
- Figur 1: einen in Bezug auf ein Koordinatensystem in der Draufsicht stark schematisiert dargestellten Einparkvorgang eines Fahrzeugs von der Startposition in eine Endposition einer Parklücke mit angedeuteten Sicherheitsbereichen am Anfang und Ende der Parklücke, so wie aus dem Stand der Technik bekannt,
- Figur 2: eine zu Figur 1 entsprechende Figur zur Darstellung eines ebenfalls aus dem Stand der Technik bekannten Einparkvorgangs für eine vergleichsweise kleinere Parklücke mit einer Fahrtrichtungsumkehr in der errechneten Einfahr-Trajektorie,
- Figur 3: einen in einer Draufsicht dargestellten schematischen Einparkvorgang in Bezug auf ein Koordinatensystem bis zu einem Punkt, bei welchem der Einparkvorgang in eine Fahrtrichtung abgebrochen wird, wobei das Fahrzeug zwar in die Parklücke passt, jedoch schief darin steht,
- Figur 4a: die Fortführung des Einparkvorgangs nach Figur 3 in einer schematisierten Draufsicht in Bezug auf ein Koordinatensystem, bei welcher nach erneuter Vermessung für den Einparkvorgang mehr Platz zur Verfügung steht als sich aus der ursprünglichen Parklückenvermessung ergeben hat,
- Figur 4b: eine vergrößerte Darstellung der Einparkbahn von Figur 4a, jedoch nur für die Fahrzeugbewegungen innerhalb der Parklücke,
- Figur 5a: eine zu Figur 4a entsprechende Figur, für den Fall, dass die ursprüngliche Parklückenvermessung zur Berechnung der Einfahr-Trajektorie so wie in Figur 3 nach einer erneuten Vermessung sich als genau ergeben hat,
- Figur 5b: eine vergrößerter Darstellung der Einparkbahn für den Einparkvorgang nach Figur 5a, jedoch nur für die Fahrbewegungen innerhalb der Parklücke und
- Figur 6a und 6b: die grafische Darstellung des Einparkvorgangs an einem Bildschirm zur Visualisierung des Einparkvorgangs für zwei Positionen (Figur 6a, Figur 6b) des Fahrzeugs während des Einparkvorgangs.

### Beschreibung der Ausführungsbeispiele:

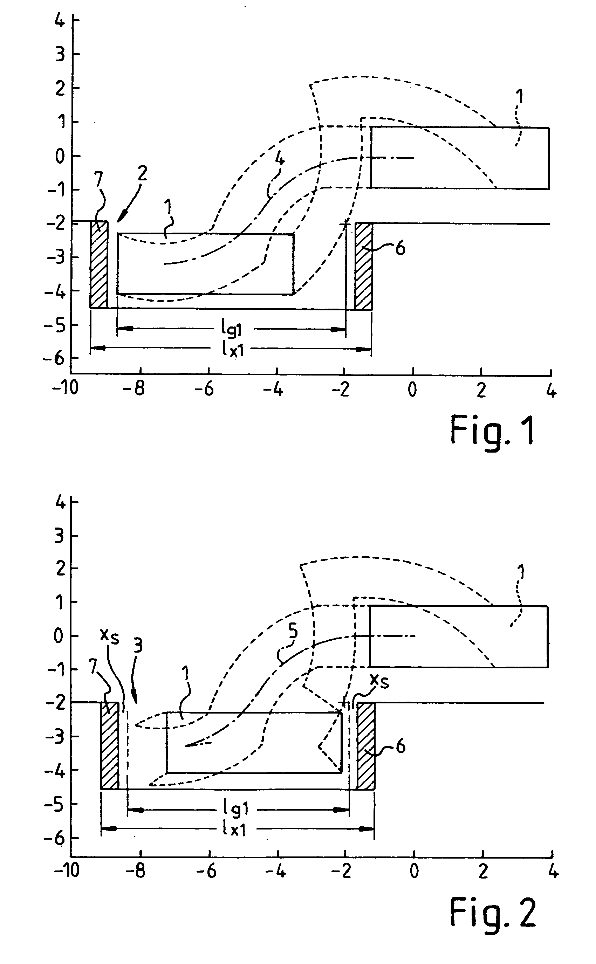

In Figur 1 und 2 ist ein Einparkvorgang eines Fahrzeugs 1 in eine Parklücke 2, 3 mit einer aus dem Stand der Technik bekannten errechneten Einparkbahn 4, 5 dargestellt.

In beiden Fällen (Figur 1 und Figur 2) vermisst zunächst der semiautonome Einparkassistent die Parklücke, sofern ein Fahrzeuglenker den semiautonomen Einparkassistenten zugeschaltet hat.

Im Fall von Figur 1 ist die Parklücke 2 mit einer Länge lₓ₁ so groß, dass der semiautonome Einparkassistent eine Einfahrbahn 4 berechnen kann, bei welcher sich durch lediglich einmal rückwärts fahren mit zwei unterschiedlichen Lenkeinschlägen das Fahrzeug in die Parklücke 2 manövrieren lässt.

Für die Berechnung der Einparkbahn 4 in die Parklücke 2 legt das System jedoch nicht die gemessene Länge der Parklücke lₓ₁ zugrunde, sondern eine reduzierte Länge l_{g1}. Auf diese Weise wird garantiert, dass die geplante Einparkbahn 4 ein 100%ig kollisionsfreies Einparken des Fahrzeugs 1 in die Parklücke 2 ermöglicht. Zunächst wird dazu die Ungenauigkeit bei der Parklückenvermessung durch ein Toleranzband 6, 7 vor und hinter dem Fahrzeug berücksichtigt. Außerdem wird ein zusätzlicher Sicherheitsabstand xₛ vorne und hinten zu den begrenzenden Fahrzeugen eingehalten. Dies führt dann dazu, dass die für den Einparkvorgang genutzte Länge l_{g1} um 2xₛ plus zweimal das Toleranzband 6, 7 kleiner ist als die bei der Parklückenvermessung bestimmte Länge lₓ₁ der Parklücke 2, 3 und auch der tatsächlichen Länge der Parklücke. Es wird somit unter Umständen viel Platz für den Einparkvorgang "verschenkt". Oder anders ausgedrückt: Parklücken werden für den Einparkvorgang verworfen, die an sich mit geringeren Toleranzbändern und geringerem Sicherheitsabstand ausreichen würden.

Die bekannten Einparkvorgänge von Figur 1 und Figur 2 unterscheiden sich dadurch, dass die zur Verfügung stehende Länge l_{g1} zum Einparken im Fall von Figur 2 kleiner ist als im Ausführungsbeispiel gemäß Figur 1, wodurch im Ausführungsbeispiel nach Figur 1 ein Einparken mit lediglich einer Einparkbewegung in eine Richtung ausreicht, wogegen in Figur 2 ein einmaliges Rangieren nach vorne erforderlich ist.

Der Erfindung liegt die Erkenntnis zugrunde, dass regelmäßig ein mehrfaches Rangieren, d.h. mehrere Vorwärts- und Rückwärtsfahrten des Fahrzeugs nach der Parklückenvermessung bei einer Einparkbahn nur unzureichend vorausberechnet werden kann.

Daher schlägt die Erfindung einen semiautonomen Einparkassistenten vor, der in der Lage ist einen "zweiphasigen" Einparkvorgang durchzuführen.

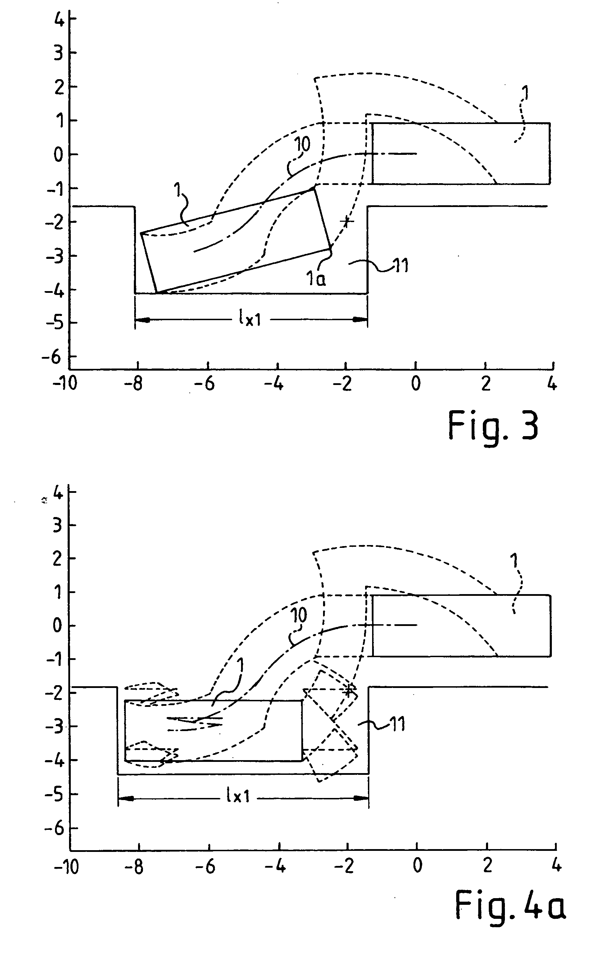

In Figur 3 ist die Situation dargestellt, dass für die Parklücke z.B. durch seitliche Abstandssensoren während dem Vorbeifahren an der Parklücke eine Länge lₓ₁ bestimmt wurde, die zwar ausreicht das Fahrzeug mit der in die Parklücke zeigenden vorderen Ecke auf einer Einparkbahn 10 in die Parklücke 11 zu manövrieren, jedoch durch auch einen einmaligen Rangiervorgang das Fahrzeug nicht so wie im Fall von Figur 1 oder 2 in der gewünschten Ausrichtung positioniert werden kann.

Normalerweise würde der semiautonome Einparkassistent bei einer Parklücke von dieser Größe nach der Parklückenvermessung diese Parklücke für einen Einparkvorgang verwerfen.

Mit einem erfindungsgemäß ausgestalteten semiautonomen Einparkassistent kann jedoch eine solche Parklücke genutzt werden. Der Fahrer kann auf der entsprechend errechneten Solltrajektorie 10 mit Hilfe eines optischen und/oder haptischen Human Machine Interface (HMI) in die Parklücke "gelotst" werden. Z.B. signalisiert ein Dauerton, dass das Ende der geplanten Trajektorie erreicht ist.

Bei dieser ersten Phase, nach welcher das Fahrzeug 1 nach einem Einparkvorgang entlang der Einparkbahn 10 gemäß Figur 3 "schräg" in der Parklücke 11 steht, teilt der semiautonome Einparkassistent dem Fahrer mit, dass er das Fahrzeug anhalten soll, wenn die vordere in die Parklücke zeigende Ecke 1a des Fahrzeugs am davor stehenden Fahrzeug vorbeibewegt wurde. Dies wird z.B. durch verminderten Abstand zum hinteren Fahrzeug oder Bordstein ausgelöst.

Hier startet dann die "zweite Phase" der Parkassistenz.

Abstandssensoren messen kontinuierlich den Abstand vor und hinter dem eigenen Fahrzeug, um die tatsächliche Parklücke auszunutzen. Aus den Fahrzeugsignalen wird die aktuelle Ausrichtung des Fahrzeugs 1, z.B. durch einen Lenkwinkelsensor, einen Radsensor oder einen Gierrate-Sensor ermittelt. Anschließend fordert der semiautonome Einparkassistent den Fahrer unter Berücksichtigung des Abstands vor oder hinter dem Fahrzeug abwechselnd auf, nach rechts oder links zu lenken sowie vorwärts oder rückwärts zu fahren bis die Positionserfassungsmittel eine Endposition feststellen. Dann schaltet das System ab.

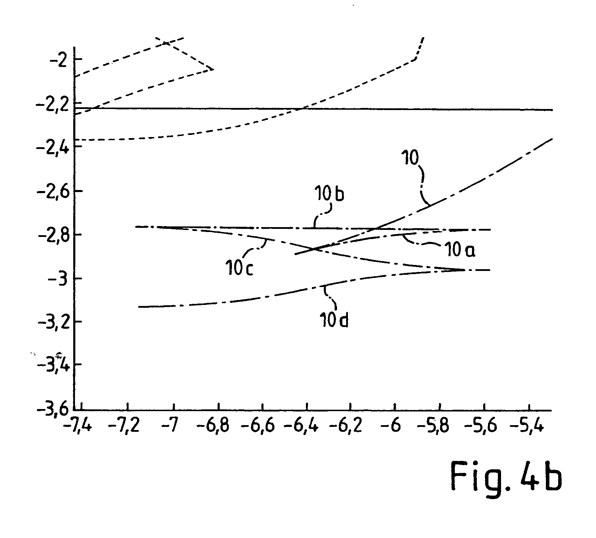

Im Fall von Figur 4a steht mehr Platz zur Verfügung als der semiautonome Einparkassistent vor dem Parkvorgang ermittelt hat. Dementsprechend sind vergleichsweise weniger Rangiervorgänge notwendig. Die weiteren Einparkbahnen nach Abschluss der Einparkbahn 10 sind vergrößert in Figur 4b abgebildet. Danach ergeben sich vier Rangiervorgänge. Zunächst wird auf Einparkbahn 10a nach vorne gefahren mit einem Lenkeinschlag nach rechts, dann auf der anschließenden Einparkbahn 10b mit einem leichten Lenkeinschlag nach links rückwärts bis der Fahrer vom System ein Stoppsignal erhält. Anschließend geht es nach vorne entlang der Einparkbahn 10c zunächst mit einem Lenkeinschlag nach rechts, im weiteren Verlauf mit einem Lenkeinschlag nach links bis der Fahrer erneut ein Stoppsignal erhält und schließlich wieder rückwärts auf der Einparkbahn 10d zunächst mit Lenkeinschlag nach rechts und dann nach links bis das System den Fahrer zum Anhalten auffordert und damit das Fahrzeug 1 auch in gewünschter Weise in der Parklücke 11 steht.

Durch das erneute Vermessen der Parklücke nach Abschluss der Einparkbahn 10, wenn das Fahrzeug 1 bereits in der Parklücke 11 steht, kann die Größe der Parklücke genauer erfasst werden, als dies beim Vorbeifahren an der Parklücke 11 möglich ist, was eine Verkleinerung der Toleranzbänder erlaubt. Dementsprechend kann der Rangierplatz an die tatsächlichen Verhältnisse besser angenähert werden, womit entweder exakt soviel Platz zur Verfügung steht, wie bei der anfänglichen Parklückenvermessung ermittelt wurde oder aber mehr Rangierplatz ausgenutzt werden kann. Figur 4a zeigt den Fall, dass mehr Platz zur Verfügung steht, als bei der anfänglichen Parklückenvermessung ermittelt wurde. Dementsprechend sind lediglich vier Rangiervorgänge notwendig, wobei kontinuierlich bei jedem Rangiervorgang der Abstand zum angrenzenden Fahrzeug gemessen wird.

Jede Teileinfahrbahn 10a, 10b, 10c sowie 10d kann somit als eine separate Einparkbahn betrachtet werden, für welche der Fahrer unabhängig von der zuvor ausgeführten Einparkbahn Anweisungen vom semiautonomen Einparkassistenten erhält.

Damit ist das System auch enorm Fehlertolerant und kann problemlos darauf reagieren, dass der Fahrer z.B. den Anweisungen für eine Teileinparkbahn nicht im ausreichenden Maße folgt oder der Fahrer sogar der zunächst berechneten Einparkbahn 10 nur unzureichend nachgefahren ist.

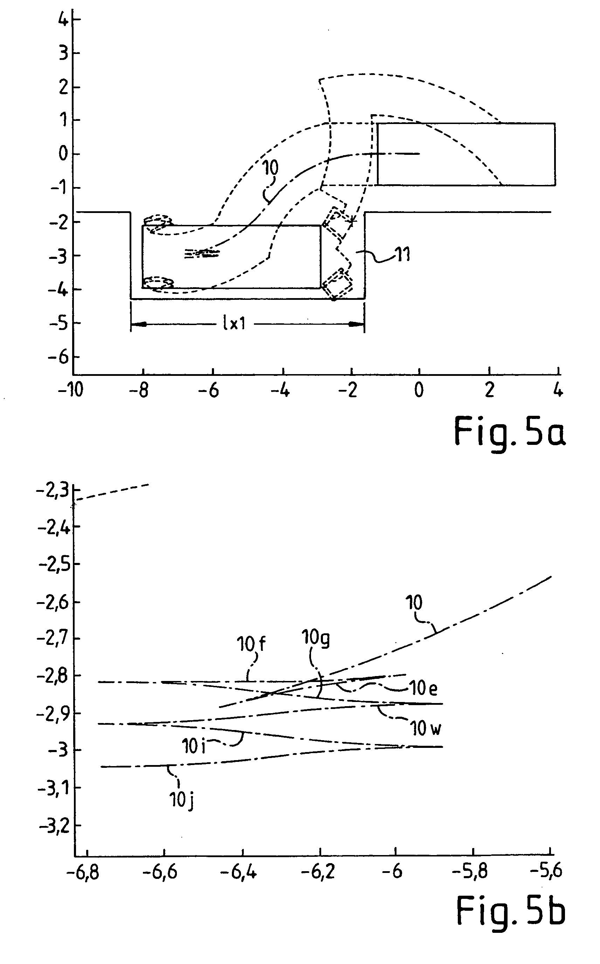

Die Figuren 5a und 5b zeigen die Situation, wenn der Platz durch die anfängliche Parklückenvermessung in der Parklücke genau vermessen wurde. Dann sind im Vergleich zu Figur 4a und 4b weitere Rangiervorgänge erforderlich, im vorliegenden Fall insgesamt sechs anstatt vier im Ausführungsbeispiel nach Figur 4a und 4b. Insgesamt sind die Teileinparkstrecken 10f bis 10j zu bewältigen (siehe Figur 5b). Damit der Fahrzeuglenker das Hin- und Herrangieren, das in der vorliegenden Anmeldung auch als "Krebsgang" bezeichnet wird, leichter durchführen kann, werden dem Fahrzeuglenker vorzugsweise die Umlenkpunkte aus dem Abstand vor und hinter dem Fahrzeug nach Berechnung vom System mitgeteilt.

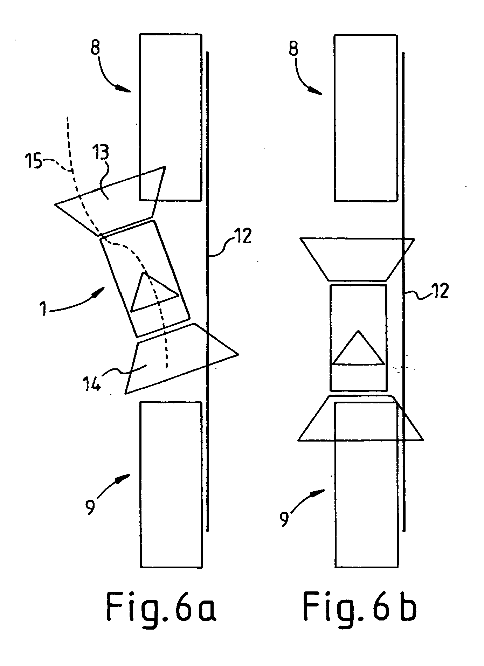

Zusätzlich kann dem Fahrer visuell auch so wie in Figur 6a und 6b die Position des Fahrzeugs 1 zu symbolhaft dargestellten vor und hinter dem Fahrzeug parkenden Fahrzeugen 8, 9 sowie einem Straßenrand 12 auf einem Bildschirm dargestellt werden. Zusätzlich können, wie aus Figur 6a und 6b ersichtlich, die Detektorfelder 13, 14 vor und hinter dem Fahrzeug symbolhaft visualisiert werden. Ebenso kann eine geplante Einfahr-Solltrajektorie 15 abgebildet werden.

Auf diese Weise lässt sich für den Fahrer in einheitlicher, eindeutiger und informativer Weise die Gesamtparksituation darstellen, wodurch er auch selbstständig entscheiden kann, wann er keine Unterstützung benötigt und mit dem Einparken fertig ist.

## Patentansprüche

1. Vorrichtung zur semiautonomen Unterstützung des Einparkvorgangs bei Fahrzeugen (1) mit einer Einrichtung zur Ermittlung der Größe (1ₓ₁) einer Parklücke (2, 3), einer Rechnereinheit, Mittel zur Erfassung der aktuellen Position des Fahrzeugs sowie einer Kommunikationseinrichtung, mit welcher einem Fahrzeuglenker Informationen und/oder Anweisungen über einen Einparkvorgang mitteilbar sind, wobei die Rechnereinheit anhand der ermittelten Größe (1ₓ₁) der Parklücke (2, 3, 11) eine Einparkbahn (4, 5, 10, 15) vorgibt, **dadurch gekennzeichnet, dass** die Rechnereinheit dazu ausgelegt ist, über die Positionserfassungsmittel nach dem Einfahren des Fahrzeugs (1) auf der Grundlage der vorgegebenen Einparkbahn (10, 15) in die Parklücke (11) die Ausrichtung des Fahrzeugs (1) in Bezug auf die Parklücke (11) sowie den Rangierplatz vor und hinter dem Fahrzeug erneut zu bestimmen und anhand dieser Daten wenigstens eine weitere Einparkbahn (10a - 10j) neu zu berechnen.

2. Vorrichtung nach Anspruch 1, **dadurch gekennzeichnet, dass** mittels der Rechnereinheit dem Fahrer über die Kommunikationseinrichtung mitgeteilt wird, das Fahrzeug (1) anzuhalten, wenn beim Einfahren des Fahrzeugs auf der Grundlage der vorgegebenen Bahn (10) die zur Parklücke zeigende vordere Ecke des Fahrzeugs (1) an der außen liegenden Ecke eines angrenzend parkenden Fahrzeugs oder eines angrenzenden Hindernisses sich vorbei bewegt hat.

3. Vorrichtung nach Anspruch 1, **dadurch gekennzeichnet, dass** Mittel vorgesehen sind, das Fahrzeug (1) anzuhalten, wenn beim Einfahren des Fahrzeugs (1) auf der Grundlage der vorgegebenen Bahn (10) die zur Parklücke zeigende vordere Ecke des Fahrzeugs (1) an der außen liegenden Ecke eines angrenzend parkenden Fahrzeugs oder eines angrenzenden Hindernisses sich vorbei bewegt hat.

4. Vorrichtung nach einem der vorhergehenden Ansprüche, **dadurch gekennzeichnet, dass** die Rechnereinheit dazu ausgebildet ist, nach dem Einparken des Fahrzeugs (1) auf der Grundlage einer vorgegebenen Einparkbahn (10) über die Kommunikationseinrichtung zur Fortsetzung des Einparkvorgangs den Fahrer aufzufordern, nach rechts oder links zu lenken, sowie vorwärts oder rückwärts zu fahren, gegebenenfalls abwechselnd und gegebenenfalls mehrfach, sofern die Positionserfassungsmittel eine Ausrichtung des Fahrzeugs (1) in der Parklücke (11) bestimmen, die noch nicht in vorgegebener Weise ausreichend ist.

5. Vorrichtung nach einem der vorhergehenden Ansprüche, **dadurch gekennzeichnet, dass** die Rechnereinheit den jeweiligen Stopppunkt bei der Fortsetzung des Einparkvorgangs dem Fahrer in Abhängigkeit des von der Positionserfassungsmittel ermittelten Abstandes vor oder hinter dem Fahrzeug (1) über die Kommunikationsmittel mitteilt.

6. Vorrichtung nach einem der vorhergehenden Ansprüche, **dadurch gekennzeichnet, dass** Stoppmittel vorgesehen sind, die bei der Fortsetzung des Einparkvorgangs das Fahrzeug (1) stoppen, wenn die Positionserfassungsmittel einen vorgegebenen Abstand vor oder hinter dem Fahrzeug (1) detektieren.

7. Vorrichtung nach einem der vorhergehenden Ansprüche, **dadurch gekennzeichnet, dass** die Positionserfassungsmittel zur Bestimmung der Ausrichtung des Fahrzeugs (1) Abstandssensoren umfassen.

8. Vorrichtung nach einem der vorhergehenden Ansprüche, **dadurch gekennzeichnet, dass** die Positionserfassungsmittel zur Bestimmung der Ausrichtung des Fahrzeugs (1) wenigstens einen Sensor zur Bestimmung des Gierwinkels des Fahrzeugs (1) umfassen.

9. Vorrichtung nach einem der vorhergehenden Ansprüche, **dadurch gekennzeichnet, dass** die Kommunikationsmittel zur Mitteilung der aktuellen Ausrichtung des Fahrzeugs (1) in Bezug auf die Umgebung an den Fahrer ausgelegt sind.

## Claims

1. Device for semi-autonomously supporting the parking process in vehicles (1) having an apparatus for detecting the size (1ₓ₁) of a parking space (2, 3), a computer unit, means for sensing the current position of the vehicle and a communication device with which information and/or instructions about a parking process can be communicated to a driver of a vehicle, wherein the computer unit predefines a parking path (4, 5, 10, 15) by means of the detected size (1ₓ₁) of the parking space (2, 3, 11), **characterized in that** the computer unit is configured to determine again the orientation of the vehicle (1) with respect to the parking space (11) and the manoeuvring space in front of and behind the vehicle using the position sensing means after the vehicle (1) has driven into the parking space (11) on the basis of the predefined parking path (10, 15), and to calculate anew at least one further parking path (10a - 10j) by reference to this data.

2. Device according to Claim 1, **characterized in that** by means of the computer unit the driver is instructed, via the communication device, to stop the vehicle (1) if, when the vehicle is driving in on the basis of the predefined path (10), the front corner of the vehicle (1) which points towards the parking space has moved past the outer corner of an adjacently parked vehicle or of an adjacent obstacle.

3. Device according to Claim 1, **characterized in that** means are provided for stopping the vehicle (1) if, when the vehicle (1) is driving in on the basis of the predefined path (10), the front corner of the vehicle (1) which points towards the parking space has moved past the outer corner of an adjacently parked vehicle or of an adjacent obstacle.

4. Device according to one of the preceding claims, **characterized in that** the computer unit is designed to request the driver via the communication device, after the vehicle (1) has entered the parking space on the basis of a predefined parking path (10), to continue the parking process, to steer to the right or left and to move forwards or backwards, if appropriate alternately and if appropriate repeatedly, if the position sensing means determine an orientation of the vehicle (1) in the parking space (11) which is not yet sufficient in predefined terms.

5. Device according to one of the preceding claims, **characterized in that**, during the continuation of the parking process, the computer unit communicates to the driver, via the communication means, the respective stopping point as a function of the distance in front of or behind the vehicle (1) which is detected by the position sensing means.

6. Device according to one of the preceding claims, **characterized in that** stopping means are provided which stop the vehicle (1) during the continuation of the parking process if the position sensing means detect a predefined distance in front of or behind the vehicle (1).

7. Device according to one of the preceding claims, **characterized in that** the position sensing means comprise distance sensors for determining the orientation of the vehicle (1).

8. Device according to one of the preceding claims, **characterized in that**, in order to determine the orientation of the vehicle (1), the position sensing means comprise at least one sensor for determining the yaw angle of the vehicle (1).

9. Device according to one of the preceding claims, **characterized in that** the communication means are configured to communicate the current orientation of the vehicle (1) with respect to the surroundings to the driver.

## Revendications

1. Dispositif d'assistance semi-autonome, d'une manoeuvre de rangement d'un véhicule (1) comprenant une installation pour déterminer la dimension (1ₓ₁) d'un emplacement de rangement (2, 3), une unité de calcul, des moyens de saisie de la position actuelle du véhicule ainsi qu'une installation de communication pour transmettre au conducteur des informations et/ou des indications concernant la manoeuvre de rangement,
l'unité de calcul prédéfinissant une trajectoire de rangement 4, 5, 10, 15) à l'aide de la grandeur (1ₓ₁) obtenue de l'emplacement de rangement (2, 3, 11),
**caractérisé en ce que**
l'unité de calcul est conçue pour redéterminer, par l'intermédiaire des moyens de saisie de position, après l'entrée du véhicule (1), sur la base de trajectoire de rangement (10, 15), prédéfinie dans l'emplacement de rangement (11), l'alignement du véhicule (1) par rapport à l'emplacement de rangement (11) et la plage de rangement en amont et en aval du véhicule, et de calculer à l'aide de ces données au moins une autre trajectoire de rangement (10a-10j).

2. Dispositif selon la revendication 1,
**caractérisé en ce que**
l'unité de calcul indique au conducteur par l'intermédiaire de l'installation de communication, d'arrêter le véhicule (1) si à l'entrée du véhicule suivant la trajectoire prédéfinie (10), le coin avant du véhicule (1) tourné vers l'emplacement de rangement a passé le coin extérieur d'un véhicule rangé, adjacent, ou d'un obstacle adjacent.

3. Dispositif selon la revendication 1,
**caractérisé par**
des moyens pour arrêter le véhicule (1) si, lorsque le véhicule (1) entre suivant la trajectoire prédéfinie (10), le coin avant du véhicule (1) tourné vers l'emplacement de rangement a passé le coin extérieur d'un véhicule rangé, adjacent, ou d'un obstacle adjacent.

4. Dispositif selon l'une des revendications précédentes,
**caractérisé en ce que**
l'unité de calcul est conçue pour qu'après le rangement du véhicule (1), suivant une trajectoire de rangement (10) prédéfinie, l'installation de communication demande au conducteur de poursuivre la manoeuvre de rangement en guidant vers la droite ou la gauche et en avançant ou en reculant, le cas échéant alternativement et plusieurs fois, dans la mesure où les moyens de saisie de position définissent un alignement du véhicule (1) dans l'emplacement de rangement (11) qui ne correspond pas encore suffisamment à la manière prédéfinie.

5. Dispositif selon l'une des revendications précédentes,
**caractérisé en ce que**
l'unité de calcul communique au conducteur, par l'intermédiaire des moyens de communication, le point d'arrêt respectif lors de la poursuite de la manoeuvre de rangement, en fonction de la distance devant ou derrière le véhicule (1), déterminée par les moyens de saisie de position.

6. Dispositif selon l'une quelconque des revendications précédentes,
**caractérisé par**
des moyens d'arrêt qui, lors de la poursuite de la manoeuvre de rangement, arrêtent le véhicule (1) si les moyens de saisie de position détectent une distance prédéfinie devant ou derrière le véhicule (1).

7. Dispositif selon l'une quelconque des revendications précédentes,
**caractérisé en ce que**
les moyens de saisie de position comprennent des capteurs de distance pour déterminer l'alignement du véhicule.

8. Dispositif selon l'une quelconque des revendications précédentes,
**caractérisé en ce que**
pour déterminer l'alignement du véhicule (1), les moyens de saisie de position comportent au moins un capteur pour déterminer l'angle de lacet du véhicule (1).

9. Dispositif selon l'une quelconque des revendications précédentes,
**caractérisé en ce que**
les moyens de communication sont conçus pour communiquer au conducteur l'alignement actuel du véhicule (1) par rapport à l'environnement.
